# EUROPEAN PATENT APPLICATION

(11) **EP 1 321 929 A2**
(43) Date of publication of application: **25.06.2003**
(21) Application number: 02080186.6
(22) Date of filing: 09.12.2002
(51) Int. Cl.: G11B 7/00

(54) **Hybrid disc architecture**

(30) Priority: 20.12.2001 US 28142
(71) Applicant: EASTMAN KODAK COMPANY, Rochester, New York 14650 (US)
(72) Inventor: Wrobel, Joseph J., Eastman Kodak Company, P.L.S., Rochester, New York 14650-2201 (US); Ha, Bruce, Eastman Kodak Company, P.L.S., Rochester, New York 14650-2201 (US)
(74) Representative: Weber, Etienne Nicolas

(57) **Abstract**

A hybrid disc including a ROM prerecorded portion and a recordable information portion located closer to the axis of rotation of the disc than the ROM portion.

## Description

The present invention relates to hybrid discs and, more particularly, to a new hybrid disc architecture.

Hybrid discs are well known in the art. See, for example, commonly assigned US-A-6,212,158, the disclosure of which is incorporated herein by reference. Hybrid discs include a ROM information portion, which is prerecorded and generally pressed during manufacturing, and a recordable portion, which is recorded to by a user. Hybrid discs are generally defined in the Recordable Compact Disc Systems Description, also known as the Orange Book. According to the Orange Book, "A Hybrid disc is a Multisession disc of which the first Session is a Mastered Session." In accordance with this definition, the ROM information portion is located closer to the axis of rotation of the disc than the recordable portion. Such architecture is common in the art. See, for example, US-A-4,940,618 (FIG. 1), US-A-5,206,063 (FIGS. 1 and 2), and US-A-5,316,814 (FIG. 2A). The hybrid disc of this architecture offers a number of advantages. Generally, the hybrid disc architecture allows the creation of a disc with a substantial amount of information imparted at low cost during manufacturing while allowing additional information to be added at a later time Programs can be prerecorded in the ROM portion for specific applications and then a user can use those programs for recording information on the recordable portion.

Although hybrid discs can be used to advantage in a number of applications, they do have a problem. In general, a hybrid disc must be a multisession disc. For every session added to a disc, program area must be set aside for lead-in and lead-out areas decreasing the space on the disc available for user data and increasing the time required to complete recording of the disc. In addition, in some applications such as Video CD, hybrid discs are generally not used since it is desirable to have a recordable area within the program area located closer to the axis of rotation of the disc than the ROM information portion.

It is therefore an object of the present invention to provide a new hybrid disc architecture, which can be used in applications that are not presently practical for hybrid discs.

It is a further object of the present invention to provide a hybrid disc architecture that is particularly useful for Video CD applications.

This object is achieved by a hybrid disc, comprising:
a) a ROM prerecorded portion; and
b) a recordable portion located within the program area closer to the axis of rotation of the disc than the ROM portion.

### ADVANTAGES

The Orange Book standard for hybrid discs requires that the prerecorded information on a hybrid disc constitute the complete session. The present invention recognizes that this limits the use of hybrid discs in their applicability and provides a new architecture, which expands the use of hybrid discs.

FIG. 1 is a plan view of a prior art hybrid disc architecture;

FIG. 2 is a plan view of the new hybrid disc architecture in accordance with the present invention.; and

FIG. 3 is a cross-sectional view of the new hybrid disc architecture in accordance with the present invention.

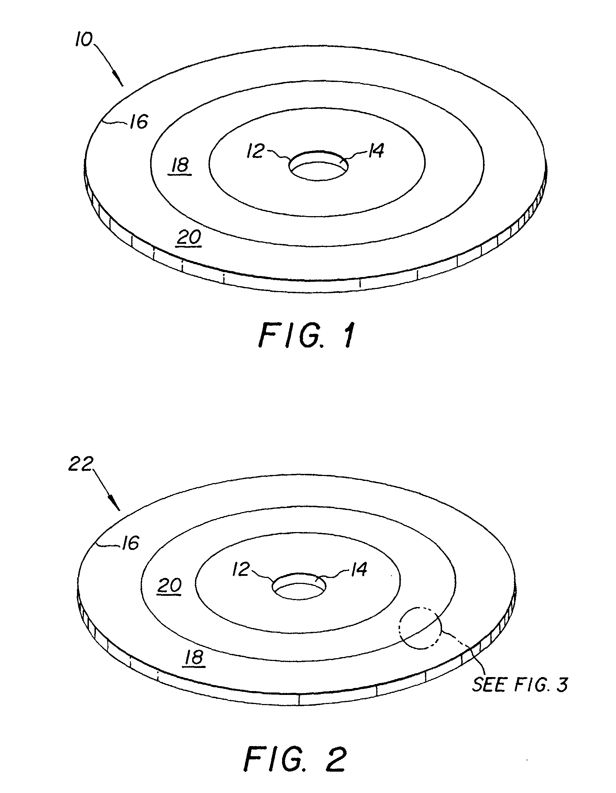

Referring to FIG. 1, a hybrid optical disc 10 is shown in accordance with the prior art. The hybrid optical disc 10 has an inner peripheral edge 12, which defines a central hole 14, and an outer peripheral edge 16. The central hole 14 permits the hybrid optical disc 10 to be mounted in an optical disc transport device which can be used in either a reading or a recording mode. The hybrid optical disc 10 further includes a read-only area 18 and a recordable area 20. Although it is only necessary to have a single read-only area 18 and a single recordable area 20 in the information (program) area of the disc, in the region near the central hole 14 there may be a plurality of interspersed areas 18 and 20.

Referring to FIG. 2, a hybrid optical disc 22 is shown in accordance with the present invention. The hybrid optical disc 22 has an inner peripheral edge 12, which defines a central hole 14, and an outer peripheral edge 16. The central hole 14 permits the hybrid optical disc 22 to be mounted in an optical disc transport device which can be used in either a reading or a recording mode. The hybrid optical disc 22 further includes a read-only area 18 and a recordable area 20. Although it is only necessary to have a single read-only area 18 and a single recordable area 20 in the information (program) area of the disc, in the region near the central hole 14 there may be a plurality of interspersed areas 18 and 20.

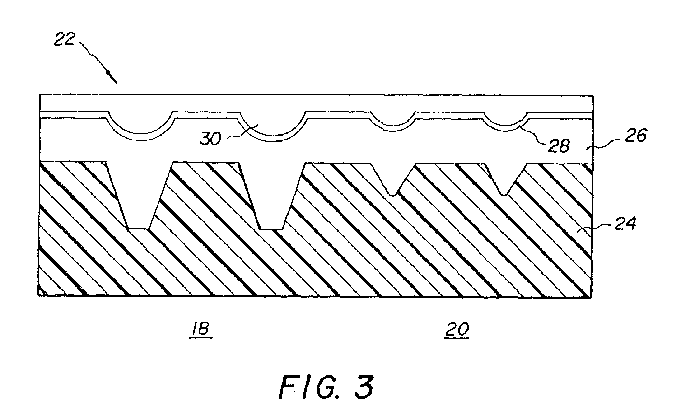

Referring to FIG. 3, the cross-section of a hybrid optical disc 22 is shown in accordance with the present invention. A preferred method of making the substrate 24 is by injection molding. During the injection molding process, the substrate 24 is formed to define ROM and recordable information areas. Over the surface of the substrate 24 is deposited the recording layer 26. The recording layer 26 is preferably a dye layer spin coated onto the substrate 24. For an example of a dye coating arrangement, see commonly assigned US-A-5,922,504 to Chapman and others. During deposition of the recording layer 26, the read-only area 18 and recordable area 20 are covered by such recording layer 26. Over the recording layer 26 a reflective layer 28 is deposited, preferably by vacuum deposition. During deposition of the reflective layer 28, the read-only area 18 and recordable area 20 are covered by such reflective layer 28. Over the reflective layer 28, one or more protective layers 30 are deposited, preferably by spin coating. During deposition of the protective layer(s) 30, the read-only area 18 and recordable area 20 are covered by such protective layer(s) 30. The protective layer(s) 30 are preferably cross-linked by exposure to light to form a damage-resistant layer.

A method of making a hybrid disc master in accordance with the present invention is as follows. A recordable disc is recorded so as to provide a source disc having a first recorded portion which will correspond to a ROM portion and a second recorded portion located within the program area closer to the axis of rotation of the disc than the first recorded portion which will correspond to a recordable portion. A portion may contain one or more tracks. This source disc is mounted in a mastering machine and the first and second portions are read by the controller and the information is fed to the ATIP and EFM encoder.. During the reading of the second portion, the mastering machine creates a continuous wobbled groove also containing timing information corresponding to a recordable portion within the program area the same length as the second portion by exposing a glass master using either a single or multiple radiation source. Then, during the reading of the first portion, the mastering machine creates a wobbled and amplitude modulated groove forming the ROM prerecorded track capable of reproducing the information in the first portion. Since the timing information in the wobble of the groove known as ATIP must match the timing information in the ROM data, the mastering machine's ATIP encoder and the EFM encoder are locked temporally via a common sync. The mastering machine controller also provides the information read from the source disc together with the programmed information differentiating the two portions to both the encoders to ensure the timecodes for the ATIP and EFM signals are identical. The exact timing of the transition from the recordable portion to the ROM portion and from the ROM portion to the recordable portion is controlled by a trigger signal from the ATIP encoder to the EFM encoder.

Another method of making a hybrid disc master in accordance with the present invention is as follows. An image is generated so as to provide a source file having a first recorded portion which will correspond to a ROM portion and a second recorded portion located within the program area closer to the axis of rotation of the disc than the first recorded portion which will correspond to a recordable portion. A portion may contain one or more tracks. This source file is transferred to a mastering machine and the first and second portions are read by the controller and the information is fed to the ATIP and EFM encoders. During the reading of the second portion, the mastering machine creates a continuous wobbled groove also containing timing information corresponding to a recordable portion within the program area the same length as the second portion by exposing a glass master using either a single or multiple radiation source. Then, during the reading of the first portion, the mastering machine creates a wobbled and amplitude modulated groove forming the ROM prerecorded track capable of reproducing the information in the first portion. Since the timing information in the wobble of the groove known as ATIP must match the timing information in the ROM data, the mastering machine's ATIP encoder and the EFM encoder are locked temporally via a common sync. The mastering machine controller also provides the information read from the source disc together with the programmed information differentiating the two portions to both the encoders to ensure the timecodes for the ATIP and EFM signals are identical. The exact timing of the transition from the recordable portion to the ROM portion and from the ROM portion to the recordable portion is controlled by a trigger signal from the ATIP encoder to the EFM encoder. A preferred way of dealing with the recordable portion located within the program area closer to the axis of rotation of the disc than the ROM portion is to designate it a reserved track. As per the Orange Book, a reserved track is a data track that is not yet recorded, but has its start and stop time recorded in the Program Memory Area. Using a reserved track allows one to reserve specific locations on the disc for later recording. It is required that the reserved track be recorded before the disc is finalized..

The following are two examples in which the presence of a recordable portion located within the program area closer to the axis of rotation of the disc than the ROM portion is an important advantage.
1) The directory of a CD-ROM disc is required by the ISO 9660 international standard ("Information processing - Volume and file structure of CD-ROM for information interchange") to reside at the start of the first track on a CD-ROM disc. If this information is imparted during the manufacture of a hybrid disc, then any additional information added to the first session of the disc will not be reflected in the directory. The conventional way to avoid this problem (employed, for example, in the Kodak Picture CD application) is to add a second session to the disc. The addition of the second session allows for an update of the disc directory, and the added files are now reflected in it. However, the use of a second session has drawbacks. Not all CD-ROM players are multisession capable, so the second session will not be seen by some players. Also, there is overhead associated with the addition of a second session which reduces the user data storage capacity of the disc and lengthens the time to record the disc. A hybrid disc made in accordance with the present invention would allow the addition of new information to the first session of the disc as additional tracks. Once all the new information was added, a complete directory reflecting all the data on the disc could be constructed and recorded into a recordable portion located within the program area closer to the axis of rotation of the disc than the ROM portion (in this case the first track in the session). The disc could then be closed without the addition of a second session. A preferred method for this application would be to identify the recordable portion located within the program area closer to the axis of rotation of the disc than the ROM portion as a reserved track, in accordance with the process defined in the Orange Book.
2) In the Video CD Specification Version 2.0, also referred to as the White Book, it is required that all the Video CD system information as well as any Segment Play Items be recorded in the first track on the disc. However, there are applications in which it would be desired to impart a substantial amount of information to the disc at manufacture, then add additional information including Segment Play Items at a later date. Without a recordable portion located within the program area closer to the axis of rotation of the disc than the ROM portion, there is no way to accomplish this task in the conventional hybrid disc architecture since the information in the first track would need to be imparted at time of manufacture. In a disc made in accordance with the present invention, the new information can be added to the first session of the disc as additional tracks. Once all the new information was added, the updated Video CD system information as well as all Segment Play Items could be recorded in a recordable portion located within the program area closer to the axis of rotation of the disc than the ROM portion (in this case the first track of the session). A preferred method for this application would be to identify the recordable portion located within the program area closer to the axis of rotation of the disc than the ROM portion as a reserved track, in accordance with the process defined in the Orange Book.

## Claims

1. A hybrid disc, comprising:
a) a ROM prerecorded portion; and
b) a recordable portion located within the program area closer to the axis of rotation of the disc than the ROM portion.

2. The hybrid disc of claim 1 further including another recordable information portion located within the program area further from the axis of rotation of the disc than the ROM portion.

3. The hybrid disc of claim 1 wherein the recordable information portion contains one or more reserved tracks.

4. A method of making a hybrid disc master, comprising the steps of:
a) providing a disc having a first recorded portion which will correspond to a ROM portion and a second recorded portion located within the program area closer to the axis of rotation of the disc than the first recorded portion which will correspond to a recordable portion;
b) reading the first and second portions;
c) programming the first and second portions; and
d) forming a disc master which has a ROM prerecorded portion and a recordable portion within the program area located closer to the axis of rotation of the disc than the ROM portion.

5. A hybrid disc made by the master disc of claim 4.

6. The method of claim 4 wherein the information in the first recorded portion will be recorded in the ROM portion of the hybrid disc made by the master disc and the second recorded portion identifies the start and end of reserved track(s) in the master disc.

7. A hybrid disc made by the master disc of claim 6.
